# EUROPEAN PATENT SPECIFICATION

(11) **EP 3 318 776 B1**
(45) Date of publication and mention of the grant of the patent: **22.09.2021**
(21) Application number: 16306457.9
(22) Date of filing: 07.11.2016
(51) Int. Cl.: F16D 65/18, B64C 13/28

(54) **ROTATING NO-BACK BRAKE SYSTEM**
ROTIERENDE BREMSEINRICHTUING OHNE RÜCKWÄRTSGANG
SYSTEME DE FREIN ANTI-RECUL ROTATIF

(43) Date of publication of application: 09.05.2018
(73) Proprietor: Ratier-Figeac SAS, 46100 Figeac Cedex (FR)
(72) Inventor: PLUCHON, Etienne, 46240 MONTFAUCON (FR)
(74) Representative: Dehns

(56) References cited:
- DE-A1- 2 331 315
- FR-A1- 2 989 060
- GB-A- 1 098 234
- JP-A- 2006 300 217
- US-A1- 2016 083 080

## Description

### FIELD OF THE DISCLOSURE

The present invention concerns a no-back system comprising friction disks providing a friction surface for frictional engagement with another friction surface, and preferably operating in an oil-immersed environment. Such no-back systems are used, for example (and not exclusively) in aircraft systems such as trimmable horizontal stabilizer actuators or THSAs i.e. systems for actuating an element for adjusting the horizontal plane or other moveable elements in an aircraft.

### BACKGROUND

Many applications are known where motion is provided or controlled using frictional engagement between two frictional surfaces. One such application is in so-called no-back systems, also known as non-return systems or no-brake systems. Such systems are provided as a safety mechanism in a rotating system where a load is applied to a shaft e.g. in an actuator. The no-back brake helps prevent uncommanded movements or 'blowback' if an actuator, for example, malfunctions. For example, the actuation of a moveable part e.g. on an aircraft, can be effected by means of a worm-screw or a ball-screw actuating system where the screw is attached on the one hand to the aircraft structure and on the other hand to the moveable part to be actuated. The function of the no-back device is to eliminate the effect of any forces which tend to oppose, back drive or favour the normal rotation of the screw (e.g. aerodynamic forces).

If, in such systems, a load were allowed to act against the input torque applied to the actuating screw, it would then be necessary to apply an even larger input torque which would require larger motors. Similarly, an assisting torque acting on the input torque applied to the actuating screw would contribute energy but would also cause difficulties regarding speed regulation and maintaining position of the actuating device.

A no-back device is used to prevent the screw from starting to rotate under the effect of an axial aerodynamic load. Any assisting or opposing force is then eliminated.

No-back systems are disclosed, for example, in EP0960811, FR2989060 and US2008/0000730.

Known systems can be complex and involve many moving parts, each of which may be subject to failure.

In some operating conditions, e.g. in rotating systems such as no-back systems where the axial load is small, combined with a high rotational velocity, a polishing phenomenon can occur. It has been found that in such conditions, particularly where the force of contact between friction surfaces is small, there can be a loss of friction. Loss of friction has been found to occur when hydrodynamic lubrication occurs.

The aim of the present invention is to provide a friction disk as well as a no-back system comprising such a friction disk, which can reduce or avoid this loss of friction.

### SUMMARY

Accordingly, the disclosure provides a no-back braking system as defined by claim 1.

The non-symmetry is with respect to a sliding direction of the disk.

Preferably, both of the first and the second major surfaces define a respective friction surface.

The form of the groove formation is a spiral groove extending around and across the friction surface.

Most preferably, the spiral groove extends over the entire friction surface.

The grooves are preferably machined into the disk surface(s). The no-back brake system has two such disks which are in frictional engagement with friction surfaces. These frictional surfaces are preferably surfaces of ratchet wheels and/or of screw shaft flanges.

### BRIEF DESCRIPTION OF THE DRAWINGS

Preferred embodiments will now be described by way of example only, with reference to the drawings.
Figure 1 is a schematic view of a no-back system incorporating a disk according to this invention.
Figure 2 is a frontal view of a disk of a no-back brake system according to the invention.
Figure 3 is a side view of a disk of a no-back brake system according to the invention.
Figure 4 is a perspective view of a disk of a no-back brake system according to the invention.

### DETAILED DESCRIPTION

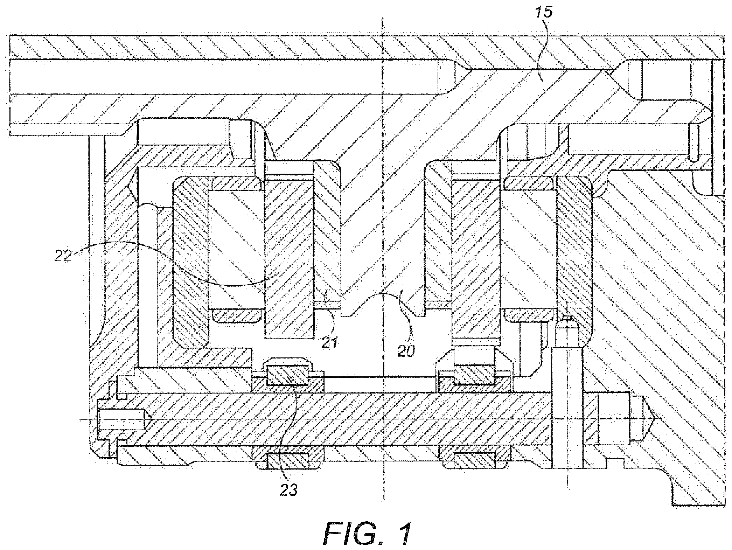

Figure 1 shows a no-back brake system mounted on the shaft of an actuator screw such as a ball screw 15. This no-back system comprises two friction disks 21 rotationally and coaxially mounted about a collar or flange 20 around the screw shaft 15. The flange is preferable, but not essential. All that is required is a first friction surface with which a (second) friction surface of a friction disk 21 frictionally engages in operation. The disks may be made of carbon or carbon composite.

Two ratchet wheels 22 are also mounted rotatably and coaxially about the screw shaft, adjacent the friction disks 21. The ratchet wheels 22 cooperate with pawls 23 arranged to permit rotation of the ratchet wheels in one direction but not in an opposite direction.

In one example, to move a moveable element, a force is applied to the screw shaft 15. The no-back device provides a force resisting rotation of the screw shaft in a direction that would result in movement in one direction (e.g. the direction of aerodynamic force) whilst providing no force resisting rotation in the opposite direction.

When a force is applied in one direction (e.g. 'nose up'), one surface of the first disk is a 'first friction surface' in frictional engagement with the flange 20 providing a 'second friction surface' and the other surface of the disk is in frictional engagement with the associated ratchet wheel. The other disk is freely rotatable. In another direction (e.g. 'nose down') the other disk is in frictional engagement with the flange and its associated ratchet wheel. In the following discussion and claims, the 'first friction surface' is the disk friction surface being discussed and the 'second friction surface' is the opposing surface with which it frictionally engages (e.g. ratchet wheel, flange).

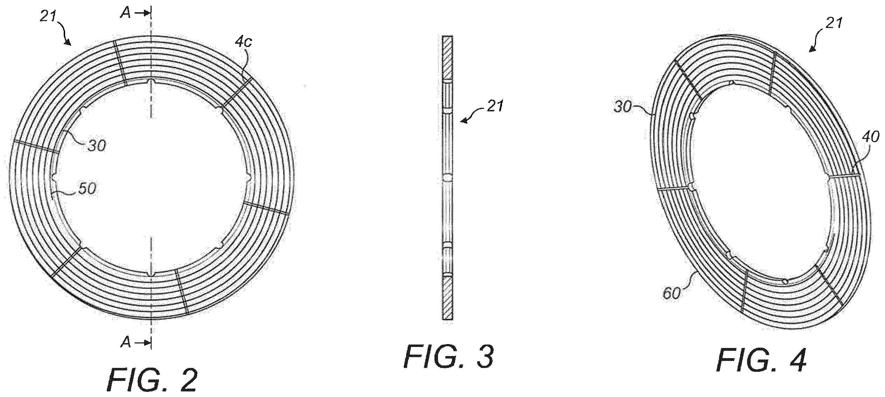

The friction disks 21 comprise opposing major surfaces, providing friction surfaces, joined by a peripheral edge (Fig 3) and have, on one or both of their friction surfaces, drainage grooves. The disks 21 are immersed in a viscous fluid e.g. oil and the coefficient of friction between the disk and the flange/ratchet wheel will vary during operation depending on various factors e.g. speed.

At the start of relative movement between the first and second friction surfaces, the coefficient of friction is high to compensate for a tangential force depending on the adhesion of the two surfaces, with little lubricant. As movement continues, sliding velocity increases and the coefficient of friction decreases rapidly with a small amount of lubricant.

The decrease in the coefficient of friction then accelerates with the sliding velocity to a lowest critical point where the system is in a mixed or heterogenous lubrication regime. Then, the coefficient of friction increases parabolically with respect to the sliding velocity in an established hydrodynamic regime. The change from the mixed to the hydrodynamic regime gives rise to the problem of loss of friction.

The actual details of the other components of the no-back system will not be described in further detail, as these can be any known system having opposing friction surfaces. One example is described in US 6,109,415. The improvement resides in the form of the friction disks and disks modified according to this disclosure could be used in any known no-back systems of this type.

As indicated above, the friction disks are immersed in and operate in a bath of fluid such as oil or other viscous fluid, to provide lubrication between the first and second friction surfaces.

In earlier systems, a wedge or film of oil was formed between the disks, which was found to have an adverse effect on the coefficient of friction.

This has been resolved by forming, in or on at least one of the major friction surfaces of the disks, drainage grooves. It has been considered preferable for these grooves to be fine and closely spaced and to preferably have their terminal openings outside the friction zone. GB 1,084,958 teaches such drainage grooves.

It has also been discovered that the fluid deposit can be further reduced by providing a second set of grooves transverse to the first grooves (see, again, GB 1,084,958). An alternative pattern of drainage grooves is described in FR 2989060.

The inventors of the present disclosure have determined that the symmetric pattern of grooves in the known systems still result in a loss of surface friction and that surface friction is not, therefore, optimised, particularly during the hydrodynamic lubrication regime.

According to the present disclosure, and with reference to Figs. 2 to 4, drainage grooves 30 are formed in or on a friction surface of a friction disk 21 in a non-symmetrical pattern, which results in more surface friction in one direction compared to another direction. The grooves 30 are preferably machined into the surface(s), but it is feasible that they could be formed in other ways.

Most preferably, the non-symmetrical groove pattern is formed as a spiral groove or several spirals around and across the friction surface. Most preferably, the spiral groove(s) covers the whole friction surface - i.e. extends all around and radially right across the disk as shown in Figs. 2 to 4, starting at an innermost point 50 of the surface of the disk and extending in a spiral form outwards, around the disk, ending at an outermost edge 60 of the disk surface.

To further optimise surface friction, transverse or radially extending grooves 40 are provided across the friction surface of the disk and across the spiral groove 30 as shown.

Advantages are provided by a symmetrical groove pattern on either friction surface of the disk or on both friction surfaces of the disk.

Such drainage grooves have been found to optimise surface friction in systems where two disks have rotational frictional contact with opposing friction surfaces, such as, but not exclusively, in a no-back system.

## Claims

1. A rotating no-back brake system comprising first and second disks (21) each defining a first friction surface and each in frictional engagement with a respective further component having a surface defining a respective second friction surface, there being relative rotation and frictional engagement between the first and second friction surfaces; each disk having a first major surface and a second major surface, opposite the first, joined by a peripheral edge, at least one of the first and second major surfaces defining the friction surface configured to frictionally contact an opposing second friction surface at the respective further component, and wherein a spiral groove (30) formation is provided on the friction surfaces, the spiral groove formation being non-symmetrical with respect to the respective friction surface in a sliding direction of the disk and further comprising radial grooves (40) extending radially across the friction surface and across the non-symmetrical groove formation.

2. A rotating no-back brake system as claimed in claim 1, wherein both of the first and the second major surfaces define a respective friction surface.

3. A rotating no-back brake system as claimed in any preceding claim, wherein the spiral groove formation (30) extends over the entire friction surface.

4. The rotating system of any preceding claim wherein the further components comprise ratchet wheels and/or screw shaft flanges.

## Patentansprüche

1. Rotierendes selbsthemmendes Bremssystem, das eine erste und eine zweite Scheibe (21) umfasst, die jeweils eine erste Reibungsfläche definieren und jeweils in Reibungseingriff mit einer jeweiligen weiteren Komponente stehen, die eine Fläche aufweist, die eine jeweilige zweite Reibungsfläche definiert, wobei eine relative Rotation und Reibungseingriff zwischen der ersten und der zweiten Reibungsfläche vorliegen; wobei jede Scheibe eine erste Hauptfläche und eine zweite Hauptfläche, die der ersten gegenüberliegt, aufweist, die durch eine Umfangskante verbunden sind, wobei mindestens eine aus der ersten und der zweiten Hauptfläche die Reibungsfläche definiert, die so konfiguriert ist, dass sie reibend eine gegenüberliegende zweite Reibungsfläche der jeweiligen weiteren Komponente berührt, und wobei eine Anordnung einer spiralförmigen Nut (30) an den Reibungsflächen bereitgestellt ist, wobei die Anordnung der spiralförmigen Nut nicht symmetrisch in Bezug auf die jeweilige Reibungsfläche in einer Gleitrichtung der Scheibe ist, und ferner radiale Nuten (40) umfasst, die sich radial über die Reibungsfläche und über die nicht symmetrische Nutenanordnung erstrecken.

2. Rotierendes selbsthemmendes Bremssystem nach Anspruch 1, wobei sowohl die erste als auch die zweite Hauptfläche eine jeweilige Reibungsfläche definieren.

3. Rotierendes selbsthemmendes Bremssystem nach einem der vorstehenden Ansprüche, wobei sich die spiralförmige Nutenanordnung (30) über die gesamte Reibungsfläche erstreckt.

4. Rotierendes selbsthemmendes Bremssystem nach einem der vorstehenden Ansprüche, wobei die weiteren Komponenten Sperrräder und/oder Schraubenwellenflansche umfassen.

## Revendications

1. Système de frein anti-recul rotatif comprenant des premier et second disques (21) chacun définissant une première surface de frottement et chacun venant en prise par frottement avec un autre composant respectif ayant une surface définissant une seconde surface de frottement respective, ayant une rotation relative et une prise par frottement entre les première et seconde surfaces de frottement ; chaque disque ayant une première surface principale et une seconde surface principale, opposée à la première, jointes par un bord périphérique, au moins une des première et seconde surfaces principales définissant la surface de frottement configurée pour entrer en contact par frottement avec une seconde surface de frottement opposée au niveau de l'autre composant respectif, et dans lequel une formation de rainure en spirale (30) est prévue sur les surfaces de frottement, la formation de rainure en spirale étant non symétrique par rapport à la surface de friction respective dans une direction de glissement du disque et comprenant en outre des rainures radiales (40) s'étendant radialement à travers la surface de frottement et à travers la formation de rainure non symétrique.

2. Système de frein anti-recul rotatif selon la revendication 1, dans lequel les première et seconde surfaces principales définissent une surface de frottement respective.

3. Système de frein anti-recul rotatif selon une quelconque revendication précédente, dans lequel la formation de rainure en spirale (30) s'étend sur toute la surface de frottement.

4. Système rotatif selon une quelconque revendication précédente, dans lequel les autres composants comprennent des roues à rochet et/ou des brides d'arbre à vis.
